# DEMANDE DE BREVET EUROPEEN

(11) **EP 0 906 749 A1**
(43) Date de publication de la demande: **07.04.1999**
(21) Numéro de dépôt: 97810735.7
(22) Date de dépôt: 03.10.1997
(51) Int. Cl.: A61C 7/02

(54) **Trousse de maintenance pour appareil médical orthodontique**

(71) Demandeur: WENGER S.A., CH-2800 Delémont (CH)
(72) Inventeur: Dahan, José, 1040 Bruxelles (BE)
(74) Mandataire: BOVARD AG - Patentanwälte

(57) **Abrégé**

Trousse (5) de maintenance ou d'urgence pour appareil orthodontique, rassemblant un assortiment d'instruments orthodontiques (9-13) permettant d'effectuer différents types d'interventions et d'opérations de maintenance et/ou d'urgence sur un appareil orthodontique. Un tourne-ligature (9), un pousse-ligature (10) et un coupe-ligature (11) sont montés en rotation entre deux côtes latérales (50, 51) servant de poignée, de manière à pouvoir être insérés entre lesdites côtes ou en être extraits en pivotant dans un plan parallèle auxdites faces internes.

Le tourne-ligature (9) est constitué par un bras recourbé (90) dont l'extrémité (91) est munie d'une encoche (92) de dimension adaptée pour saisir et coincer une ligature (3). Le pousse-ligature (10) est constitué par un bras (100) dont l'extrémité est constituée en fouloir cannelé (101) et munie d'une encoche (102) de dimension adaptée pour crocheter un élastique de maintien d'arche porteuse (2). Le coupe-ligature (11) est constitué par une paire de ciseaux à bouts (110) arrondis.

La trousse comporte en outre une clé à vérin (12) permettant d'ajuster la vis d'expansion, et de précelles 14.

## Description

La présente invention concerne le domaine des instruments orthodontiques, en particulier des instruments de maintenance pour appareils orthodontiques.

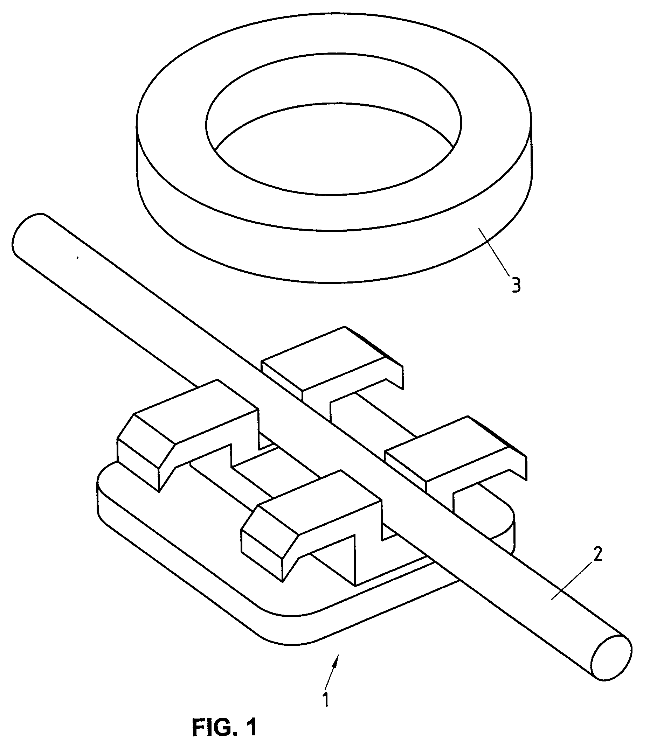

Les appareils orthodontiques, que portent en particulier les adolescents pour redresser et corriger la position des dents, comportent de manière conventionnelle des attaches fixées aux dents appelées plaquettes, ou brackets, et reliées entre elles par un fil, ou arc porteur. Un exemple de plaquette couramment utilisée est indiqué sur la figure 1 par le numéro de référence 1. On peut ajuster la tension de l'arc porteur 2, et contrôler ainsi la force de repoussement exercée sur les dents. L'arc porteur est fixé aux différentes plaquettes par des moyens de ligation, par exemple par des ligatures 3 constituées par des fils métalliques non représentés ou par des anneaux élastiques toroïdaux, qui entourent la plaquette, ou par des chaînes élastiques permettant de lier l'arc à plusieurs plaquettes sur plusieurs dents. Un appareil orthodontique complet peut également comporter différents autres éléments, notamment des élastiques intermédiaires entre les deux mâchoires, selon les corrections qui doivent être effectuées. Des appareils amovibles non représentés, fixés aux dents de manière non permanente peuvent par ailleurs être ajoutés avant, pendant ou après le traitement par un système multiattaches.

Les principales opérations d'orthodontie, telles que la pose de l'appareil et son ajustage périodique, doivent être effectuées par un spécialiste orthodontiste. Toutefois, un certain nombre d'opérations de maintenance courante ou de réparations urgentes peuvent ou doivent partois être effectuées par le patient lui-même. Ces interventions ont par exemple souvent trait à des problèmes liés aux moyens de ligation ou aux moyens de traction entre les mâchoires. Il arrive par exemple assez souvent que les ligatures se tournent, se déchirent ou se déplacent de manière impromptue et gênent le patient. Il n'est pas toujours nécessaire ou possible, par exemple en vacance, de consulter son orthodontiste pour remédier à ces problèmes mineurs. En outre, il est souvent désiré que le patient puisse retendre lui-même les élastiques entre les arcs du haut et du bas, ou encore élargir l'appareil amovible à l'aide d'une vis d'expansion, ou vérin (non illustré).

Ces menues interventions sont généralement effectuées au moyen d'un assortiment d'instruments plus ou moins spécifiques, tels que brucelles ou clé à vérin par exemple, réunis par le patient ou qui peuvent lui être remis par son orthodontiste.

Un but de l'invention est de proposer une trousse de maintenance pour appareil médical orthodontique, qui permette au patient d'effectuer différentes opérations de maintenance sur son appareil, et qui soit plus pratique que les assortiments d'instruments usuels.

Ce but est atteint selon l'invention au moyen d'une trousse présentant les caractéristiques de la revendication principale, des formes d'exécution préférentielles étant en outre indiquées dans les revendications dépendantes.

Plus particulièrement, ce but est atteint au moyen d'une trousse multifonctionnelle regroupant tout un assortiment d'instruments orthodontiques, permettant d'effectuer différents types d'interventions et d'opérations de maintenance et/ou de ligation sur un appareil orthodontique.

Les différents instruments sont ainsi réunis en une seule trousse compacte et peuvent ainsi être acquis et transportés simultanément.

De préférence, les différents instruments orthodontiques sont montés en rotation, à la manière d'un couteau suisse, entre deux côtes latérales servant de poignée. Les faces internes des côtes latérales sont sensiblement parallèles, en sorte que le ou lesdits instruments montés entre lesdites côtes peuvent être insérés entre lesdites côtes ou en être extraits en pivotant dans un plan parallèle auxdites faces internes des côtes latérales (2, 3).

L'invention sera mieux comprise à l'aide de la description donnée à titre d'exemple et illustrée par les figures qui montrent :
La figure 1 une vue en perspective des principaux éléments constituant un appareil médical orthodontique de type conventionnel, sur lequel des interventions peuvent être effectuées au moyen de la trousse de la présente invention.
La figure 2 une vue latérale en éclaté d'un exemple de mode de réalisation selon la présente invention, comportant divers instruments orthodontiques.
La figure 3 une vue de profil de la trousse de l'invention.

Les appareils orthodontiques usuels sont généralement constitués des trois principaux éléments illustrés sur la figure 1. Des plaquettes 1 métalliques ou céramiques, généralement connues sous la désignation anglo-saxonne de 〈〈 brackets 〉〉, sont fixées sur les dents au moyen de colle. Les plaquettes sont reliées entre elles par un fil 2, ou arc porteur, exerçant une pression ou une traction sur la dent par l'intermédiaire des plaquettes. L'arc porteur 2 peut généralement coulisser par-dessus les plaquettes, et n'est plaqué sur ces dernières que par des moyens de ligation, habituellement par des ligatures en matériau élastique ou métallique qui entourent la plaquette par-dessus l'arc porteur. D'autres moyens de ligation, par exemple des chaînes élastiques autour de plusieurs dents, peuvent aussi être adoptées suivant la dent à redresser. La tension de l'arc porteur peut être ajustée, par exemple à mesure que la position des dents se corrige, au moyen d'une vis d'expansion par exemple.

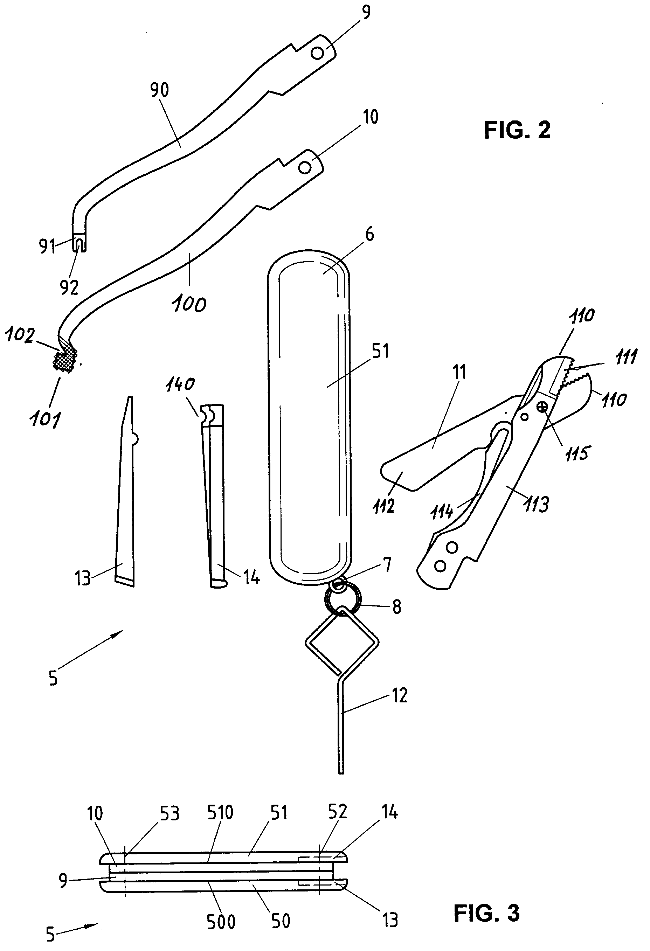

Les principales interventions mineures qui doivent parfois être effectuées par le porteur d'appareil orthodontique concernent l'ajustage de la tension de l'arc porteur et des problèmes avec les moyens de ligation. Ces interventions mineures peuvent être effectuées sans danger au moyen de la trousse de maintenance 5 illustrée sur les figures 2 et 3. Cette trousse comporte essentiellement un corps constitué de deux côtes latérales 50 et 51 servant de poignée. Les côtes peuvent avantageusement être réalisées par moulage en matériau synthétique, ou en métal, et leurs faces internes 500, 510 sont sensiblement parallèles. Différents instruments orthodontiques 9, 10, 11 sont montés en rotation autour d'axes 52, 53 reliant les deux côtes 50, 51, de manière à pouvoir être repliés entre lesdites côtes ou en être extraits pour utilisation en les pivotant dans un plan parallèle aux faces 500, 510. Les instruments 9 à 14 de la trousse sont illustrés en éclaté pour montrer leur forme ; il est cependant nécessaire de comprendre que les instruments 9 à 11 sont montés de manière inamovible autour des axes 52, 53. Des lames ressort, non représentées mais connues par exemple dans la technique des couteaux de poche, permettent de maintenir les divers instruments 9 à 11 soit en position complètement extraite ou complètement repliée entre les deux côtes 50, 51. Les instruments coulissant entre les deux côtes 50, 51 du couteau sont réalisés à partir de tôles métalliques planes afin de disposer un nombre maximum d'instruments dans une épaisseur donnée, ce qui permet de minimiser l'épaisseur totale de la trousse.

Les instruments orthodontiques dont est munie la trousse de maintenance 5 comportent un tourne-ligature 9, constitué par un bras recourbé dont l'extrémité 91 est munie d'une encoche 92 de dimension adaptée pour saisir et coincer une ligature. Cet instrument permet de déplacer ou de corriger la position d'une ligature 3 qui se serait malencontreusement retournée autour de la plaquette correspondante 1, en la coinçant dans l'encoche 92 pour la manipuler. Le bras recourbé permet d'atteindre sans difficultés même les ligatures sur les molaires du fond. La dimension de l'encoche 92 est de préférence choisie de manière à pouvoir également saisir l'arc porteur pour le retendre ou le manipuler, ou de replacer une chaîne élastique autour des plaquettes.

Un pousse ligature 10 avec fouloir 101 permet de pousser une ligature en position de manière à coincer l'arc porteur 2. Le pousse ligature comporte un bras 100 qui se termine en fouloir 101 muni de cannelures afin de pousser les ligatures sans glisser. Une encoche 102 sous le fouloir sert à crocheter les chaînes élastiques pour les replacer ou les remplacer.

Il arrive que les ligatures 3 se déchirent partiellement, en sorte qu'elles ne peuvent alors plus remplir leur fonction. Si la ligature ainsi abîmée gêne le patient, il est souvent nécessaire de la couper pour la retirer. La trousse de l'invention est dans ce but munie d'un coupe-ligature 11 constitué comme une paire de ciseaux à bouts 110 arrondis. La lame 111 des ciseaux est très courte, environ un centimètre, et de préférence plus courte que la portion de manche, afin de faciliter la prise sur la ligature et de prévenir tout risque de couper les gencives ou dans la langue par exemple. Le coupe-ligature est constitué de trois éléments répartis dans deux plans, c'est-à-dire d'un premier bras 113 articulé autour de l'axe 52, d'un second bras 112 articulé autour d'un axe 115 avec le premier bras 113, et d'une lame d'ouverture 114 apte à pivoter autour de l'axe 52 et montée dans le même plan que le second bras de ciseau 112. Une lame ressort évoquée dans la trousse de maintenance 5 exerce une pression sur la lame d'ouverture 114, en sorte que celle-ci maintient le coupe-ligature ouvert lorsque celui-ci est extrait hors du corps de la trousse 5.

La trousse 5 comporte de préférence une clé à vérin 12 permettant d'ajuster la vis d'expansion non représentée de l'appareil orthopédique. La clé à vérin est montée de manière amovible sur un anneau en spirale 8 enfilé sur un petit anneau 7 solidaire du corps de la trousse 5. La clé à vérin est constituée d'un fil de section ronde ou hexagonale apte à collaborer avec la tête femelle de la vis d'expansion pour l'ajustement de l'appareil. Pour faciliter la manipulation, la clé à vérin 12 peut être dissociée de la trousse soit en la dégageant de l'anneau 8, soit en dégageant cet anneau spirale du petit anneau 7.

La trousse 5 comporte en outre de préférence un cure-dents 13 en matériau synthétique inséré dans un logement ménagé à cet effet dans une des côtes 50 de la trousse. Le cure-dent peut être dissocié du reste de la trousse 5 pour retirer les restes alimentaires sur l'appareil orthopédique. Des précelles 14 métalliques sont logées de façon similaire dans l'autre côte 51 de la trousse. Elles peuvent être également utilisées pour retirer des restes alimentaires ou des débris élastiques provenant par exemple d'une ligation déchirée. Une encoche 140 à l'extrémité de chaque partie de la précelle permet de crocheter une chaîne élastique ou métallique pour la déplacer ou la retendre.

L'homme du métier comprendra que d'autres instruments, permettant d'effectuer n'importe quel type d'opérations de maintenance ou d'urgence sur un appareil orthodontique ou sur le patient lui-même, peuvent également être liés de manière fixe ou amovible à la trousse décrite sans sortir du cadre de la présente invention.

Par ailleurs, le terme de trousse utilisé tout au long de cette description et dans les revendications doit être compris au sens le plus large comme englobant tout étui, outil multifonctionnel ou porte-instrument regroupant plusieurs instruments utiles au patient et à l'homme de l'art dans le domaine chirurgical ou médical ou paramédical pour des opérations de maintenance ou des interventions urgentes.

## Revendications

1. Trousse de maintenance (5) pour appareil orthodontique, caractérisée en ce qu'elle rassemble un assortiment d'instruments orthodontiques (9-13) permettant d'effectuer différents types d'interventions et d'opérations de maintenance et/ou d'urgence sur un appareil orthodontique ou sur le patient lui-même, et en ce que au moins certains instruments (9, 10, 11) sont mutuellement solidairement liés.

2. Trousse selon la revendication précédente, caractérisée en ce que au moins un desdits instruments orthodontiques (9, 10, 11) est monté en rotation entre deux côtes latérales (50, 51) servant de poignée, les faces internes (500, 510) desdites côtes latérales étant sensiblement parallèles, le ou lesdits instruments orthodontiques (9, 10, 11) montés en rotation entre lesdites côtes pouvant être insérés entre lesdites côtes ou en être extraits en pivotant dans un plan parallèle auxdites faces internes.

3. Trousse selon la revendication précédente, caractérisée en ce qu'au moins un desdits instruments orthodontiques est constitué par un tourne-ligature (9).

4. Trousse selon la revendication précédente, caractérisée en ce que ledit tourne-ligature (9) est constitué par un bras recourbé (90) dont l'extrémité (91) est munie d'une encoche (92) de dimension adaptée pour saisir et coincer une ligature métallique ou élastique (3).

5. Trousse selon l'une des revendications précédentes, caractérisée en ce qu'au moins un desdits instruments orthodontiques est constitué par un pousse-ligature (10).

6. Trousse selon la revendication précédente, caractérisée en ce que ledit pousse-ligature (10) est constitué par un bras (100) dont l'extrémité est constituée en fouloir cannelé (101).

7. Trousse selon la revendication précédente, caractérisée en ce que ledit pousse-ligature (10) est muni d'une encoche (102) de dimension adaptée pour crocheter un élastique.

8. Trousse selon l'une des revendications précédentes, caractérisée en ce qu'au moins un desdits instruments orthodontiques est constitué par un coupe-ligature (11).

9. Trousse selon la revendication précédente, caractérisée en ce que ledit coupe-ligature (11) est constitué par une paire de ciseaux à bouts (110) arrondis.

10. Trousse selon l'une des revendications précédentes, caractérisée en ce qu'il est en outre muni d'une clé à vérin (12) permettant d'ajuster la vis d'expansion, ou vérin.

11. Trousse selon la revendication précédente, caractérisée en ce que ladite clé à vérin (12) est liée de manière amovible à un anneau (7) solidaire de ladite trousse.

12. Trousse selon l'une des revendications précédentes, caractérisée en ce qu'elle est en outre munie de précelles (14).

13. Trousse selon la revendication précédente, caractérisée en ce que lesdites précelles (14) peuvent être insérées dans un logement constitué dans lesdites côtes, et en ce qu'elles sont munies d'une encoche (140) de dimension adaptée pour crocheter un élastique.
